# FASCICULE DE BREVET EUROPEEN

(11) **EP 1 826 505 B1**
(45) Date de publication et mention de la délivrance du brevet: **09.04.2008**
(21) Numéro de dépôt: 06075432.2
(22) Date de dépôt: 24.02.2006
(51) Int. Cl.: F24J 2/14

(54) **Capteur solaire à concentration**
Sonnenkollektor mit Konzentration
Solar collector with concentration

(43) Date de publication de la demande: 29.08.2007
(73) Titulaire: Mattioli, Raymond, 2222 Luxembourg (LU)
(72) Inventeur: Mattioli, Raymond, 2222 Luxembourg (LU)
(74) Mandataire: pronovem

(56) Documents cités:
- US-A- 4 059 094
- US-A- 4 131 109
- US-A- 4 220 136
- US-A- 4 337 756

## Description

### Objet de l'invention

La présente invention se rapporte à un capteur solaire à concentration.

### Etat de la technique

Le principe général de fonctionnement d'un capteur solaire est de capter le rayonnement solaire pour le transformer en chaleur ou en électricité.

Il existe principalement deux types de capteurs, ceux qui sont « plans » et ceux « à concentration ». Les capteurs plans transforment le rayonnement solaire en chaleur sur toute la surface du capteur sans la concentrer, alors que les capteurs à concentration concentrent le rayonnement solaire au niveau du foyer grâce à un réflecteur ou grâce à des moyens optiques agissant par un effet de loupe.

Parmi les capteurs solaires à concentration, on distingue, d'une part, les capteurs utilisant un réflecteur en forme de parabole de révolution. Ces capteurs concentrent les rayons solaires au niveau du foyer de la parabole sur un moteur Stirling, moteur dans lequel la chaleur est transformée en mouvement, un mouvement lui-même transformé en électricité grâce à un alternateur.

On distingue, d'autre part, les capteurs utilisant un réflecteur cylindro-parabolique qui concentrent les rayons solaires sur un convertisseur permettant de transformer les rayons solaires en chaleur. Le convertisseur comprend généralement un tube dans lequel circule un fluide caloporteur. Ce fluide va permettre de stocker la chaleur emmagasinée dans un réservoir de stockage ou de la restituer via un échangeur de chaleur.

Le convertisseur se doit de présenter non seulement une absorption élevée de tout le spectre du rayonnement solaire, mais aussi de posséder une émissivité, c'est-à-dire une réémission de chaleur, réduite. De plus, dans les capteurs solaires à concentration, la surface du convertisseur est généralement plus faible que celle de l'ouverture du capteur.

De tels capteurs solaires à concentration sont bien connus. Les convertisseurs employés présentent soit une section rectangulaire ou une section circulaire, les réflecteurs peuvent, quant à eux, être hémicylindriques ou cyclo-paraboliques.

Les documents EP 0 033 054, US 3 321 012, et US 4 024 852 décrivent des capteurs solaires dont le convertisseur possède une section rectangulaire. Comme décrit dans le document EP 0 033 054, le réflecteur peut avoir la forme d'une courbe continue composée d'au moins 5 arcs de cercles se raccordant tangentiellement l'un à l'autre, mais il peut aussi avoir une forme hémicylindrique, comme décrit dans le document US 3 321 012, ou bien encore être de forme cyclo-parabolique comme décrit dans le document US 4 024 852.

Les documents US 4 059 094, AT 402 114 et AT 344 375 décrivent des capteurs solaires dont le convertisseur possède une section circulaire. Comme décrit dans les documents AT 402 114 et AT 344 375, le réflecteur peut avoir une forme hémicylindrique, ou bien encore une forme cyclo-parabolique comme décrit dans le document US 4 059094.

Différentes solutions ont été proposées afin d'améliorer l'efficacité des capteurs solaires à concentration. Certaines de ces solutions reposent sur l'emploi de différents matériaux pour la confection des éléments constitutifs d'un capteur et ce afin d'augmenter le rendement du transfert de l'énergie solaire en chaleur.

D'autres solutions, comme cela a été décrit dans les documents AT 344 375 et AT 402 114, proposent de maximiser la quantité de rayonnement solaire reçu par le capteur en employant un « absorbeur », un élément auxiliaire qui fait partie intégrante du convertisseur. Cet absorbeur capte une partie du rayonnement solaire indirect et transfère la chaleur supplémentaire, ainsi absorbée, au fluide caloporteur.

Toutefois, ces solutions procurent un rendement énergétique encore bien trop faible et présentent l'inconvénient de ne pas limiter les pertes thermiques engendrées par un phénomène de réémission de chaleur notamment au niveau du convertisseur.

### Buts de l'invention

La présente invention vise à fournir un capteur solaire à concentration qui ne présente pas les inconvénients de l'état de la technique.

Elle vise en particulier à fournir un capteur solaire à concentration présentant une efficacité améliorée. Elle vise en outre à fournir un capteur solaire qui peut être utilisé sous la forme de panneaux solaires, et qui peut, en outre, être utilisé pour la production d'électricité, de chauffage, de climatisation ou pour le dessalement de l'eau.

Les expressions « capteur », « cellule », « collecteur » sont utilisées indifféremment dans la suite de l'exposé de l'invention.

### Résumé de l'invention

La présente invention décrit un capteur solaire à concentration comprenant une couverture transparente aux rayons solaires, un réflecteur de section cylindro-parabolique, un élément caloporteur et un transformateur permettant de diminuer les pertes d'énergie par émissivité, ledit transformateur n'étant pas en contact avec ledit élément caloporteur.

Selon des formes particulières de réalisation, l'invention comporte l'une ou plusieurs des caractéristiques suivantes :
- l'élément caloporteur est disposé à l'intérieur d'un tube à vide.
- le transformateur est fixé à la couverture et/ou au réflecteur et/ou au tube à vide.
- le transformateur est une lame située dans le plan de symétrie de la section du réflecteur.
- le transformateur est une lame de carbone ou de silice ou une lame métallique.
- le transformateur comprend des lamelles.
- le transformateur est recouvert d'une substance à forte émission thermique.
- la couverture du capteur est faite en matière synthétique transparente ou en verre solaire.
- le volume est un volume rempli d'un gaz ou d'un liquide.
- le capteur comprend en outre une ouverture permettant de remplir ou évacuer le gaz ou liquide du volume.
- l'élément caloporteur a une section rectangulaire, une section circulaire, une section ovale, ou a une forme carrée.
- l'élément caloporteur est un tube métallique ou un tube en matière plastique.
- la surface de l'élément caloporteur est recouverte partiellement ou entièrement d'une substance à forte absorption du spectre solaire et à faible émission thermique.
- l'élément caloporteur possède les caractéristiques d'un caloduc.
- l'élément caloporteur se situe au foyer du capteur solaire.
- l'élément caloporteur contient un liquide ou un gaz caloporteur.
- le capteur comprenant en outre un isolant thermique.
- l'isolant thermique est choisi parmi une mousse de polyuréthane, une mousse de polystyrène, de la fibre de roche, et de la fibre de verre.
- le capteur comprend en outre au moins un moyen de poursuite du soleil.

La présente invention divulgue par ailleurs l'utilisation du capteur solaire sous la forme de panneaux solaires.

La présente invention divulgue également l'utilisation du capteur solaire pour la production d'électricité ou de chauffage ou de climatisation ou pour le dessalement de l'eau.

### Brève description des figures

La figure 1 représente schématiquement une forme d'exécution particulière du capteur solaire selon l'invention.

La figure 2 représente schématiquement une forme d'exécution particulière du transformateur.

La figure 3 représente schématiquement une pluralité de capteurs solaires selon l'invention formant un panneau solaire.

### Description détaillée de l'invention

Dans le capteur solaire à concentration selon l'invention, le rayonnement solaire est concentré sur un élément caloporteur 3 par l'intermédiaire d'un réflecteur longitudinal de section cylindro-parabolique 2.

Le rayonnement solaire reçu par l'élément caloporteur 3 est absorbé, toutefois une partie de cette énergie absorbée est réémise dans le volume 7. Cette énergie réémise peut traverser la couverture 1, elle sera alors définitivement perdue, ou être absorbée par la couverture 1 du capteur solaire.

L'originalité de la présente invention repose sur l'emploi d'un transformateur 5 permettant d'utiliser une partie du rayonnement solaire, de préférence le rayonnement solaire indirect, pour diminuer les pertes d'énergie par émissivité et pour limiter la quantité d'énergie radiante.

On entend par « énergie radiante », l'énergie émise lors du phénomène naturel appelé émissivité thermique, un phénomène durant lequel toute matière frappée par le rayonnement solaire émet un rayonnement infra-rouge en se refroidissant. Ainsi, l'énergie radiante comprend l'énergie réémise par les éléments qui composent le collecteur solaire, en particulier par l'élément caloporteur.

Le capteur solaire selon l'invention comprend une couverture 1, un réflecteur à section cylindro-parabolique 2, un élément caloporteur 3 ainsi qu'un transformateur 5.

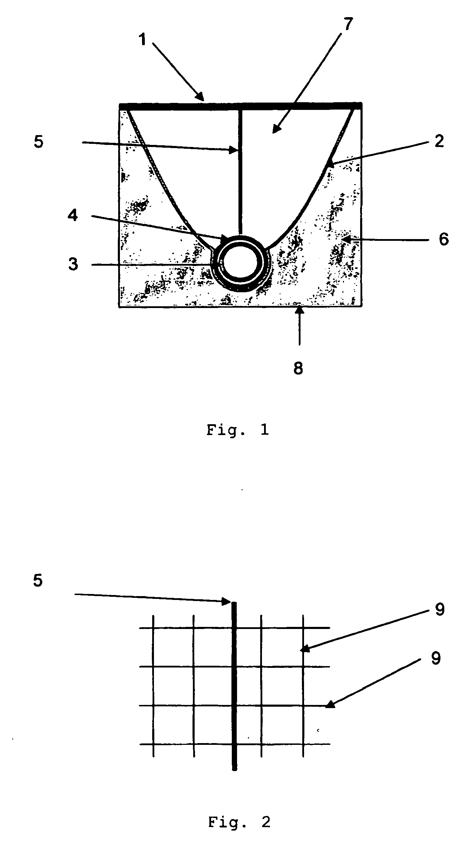

Selon une forme particulière d'exécution de l'invention, l'ensemble réflecteur 2 et élément caloporteur 3 repose, ou est inclus, dans une couche d'un isolant thermique 6 qui repose dans un berceau 8, ou bâti, sur lequel la couverture 1 repose (Figure 1). Ledit berceau 8 est de préférence de forme carré ou rectangle.

De préférence, la couverture 1 est faite d'un matériel transparent aux rayons solaires qui présente un faible taux de réflexion et une transmission élevée. Avantageusement, le matériel est une matière synthétique transparente ou un verre solaire.

On entend par « verre solaire » un verre qui possède une faible teneur en fer et dont la surface est traitée de façon à réduire les effets de réflexion. Le traitement de surface peut être obtenu par l'application d'une couche ou d'un film de Teflon.

Avantageusement, la surface intérieure de la couverture 1 peut être recouverte d'une substance réfléchissant les rayons infrarouges.

Le réflecteur 2 est de section cylindro-parabolique et de forme longitudinale. Il permet d'obtenir la concentration du rayonnement solaire sur l'élément caloporteur 3 qui se situe au niveau du foyer de la parabole.

Le réflecteur 2 possède une surface hautement réfléchissante. De préférence, il présente l'aspect d'un miroir. Dans ce but, le réflecteur 2 peut être fait d'un matériau rigide, du verre par exemple, sur lequel est appliquée une couche d'une substance réfléchissante.

De préférence, le réflecteur 2 est en aluminium.

L'élément caloporteur 3 dans lequel circule un fluide caloporteur est de préférence à section rectangulaire, à section circulaire, à section ovale ou de forme carrée. Il peut s'agir d'un tube en métal ou en matière plastique résistant aux températures de fonctionnement du capteur solaire. De préférence, ledit élément caloporteur est en cuivre ou en aluminium.

De préférence, la surface de l'élément caloporteur 3 est recouverte, entièrement ou partiellement, d'une couche d'une matière à forte absorption du spectre solaire et à faible émission thermique. Toutefois, dans le cas d'un recouvrement partiel dudit élément caloporteur 3, la substance à forte absorption du spectre solaire et à faible émission thermique devra recouvrir la surface dudit élément 3 qui est tournée vers l'ouverture de la parabole.

L'élément caloporteur 3 contient un gaz ou un liquide caloporteur. Le gaz caloporteur peut être de l'air. Le fluide caloporteur peut être de l'eau, avec ou sans additif, ou pour des températures de fonctionnement de plus de 200 °C, ledit fluide peut être une huile stable, qui ne se désagrège pas, à hautes températures.

Avantageusement l'élément caloporteur 3 possède les caractéristiques d'un caloduc, encore appelé « heatpipe ».

Un caloduc est un tube creux contenant un fluide caloporteur sous vide qui est choisi en fonction de sa température de condensation/vaporisation. Le caloduc permet d'uniformiser la chaleur et de déplacer le plus rapidement possible grâce à un phénomène de changement de phase. L'énergie solaire concentrée par le réflecteur au sein du convertisseur va permettre la vaporisation du fluide caloporteur. Cette énergie sera ensuite restituée au niveau d'une zone plus froide, dans un échangeur de chaleur par exemple, par la condensation du fluide caloporteur.

De préférence, l'élément caloporteur 3 est disposé à l'intérieur d'un tube sous vide 4. Ledit tube 4 permet de limiter les pertes d'énergie de l'élément caloporteur 3.

Avantageusement, ledit tube à vide 4 est fait d'un matériel transparent, de préférence il s'agit de verre solaire ou de verre borosilicaté. Ledit tube 4 peut être recouvert d'une couche d'une substance ayant des propriétés anti-réflexion.

L'isolation thermique du capteur solaire selon l'invention est assurée d'une part par la présence de la couverture 1, et d'autre part, par un isolant thermique 6.

De préférence, l'isolant 6 est de la mousse de polyuréthane ou de polystyrène, de la fibre de roche, ou de la fibre de verre.

Le transformateur 5 permet de diminuer les pertes de chaleur due à l'émissivité de l'élément caloporteur 3 et participe ainsi à l'isolation du capteur solaire en créant une barrière thermique contre les réémissions infra-rouges de l'élément caloporteur 3. En captant une partie du rayonnement solaire, le transformateur 5 s'échauffe et réémet de l'énergie radiante qui est transférée au volume 7.

Le transformateur 5 n'est pas en contact avec l'élément caloporteur 3, ni de façon directe, ni de façon indirecte. Il n'a y pas de contact solide-solide entre ledit transformateur 5 et ledit élément caloporteur 3. Dans la forme d'exécution dans laquelle l'élément caloporteur 3 est disposé à l'intérieur d'un tube sous vide 4, le transformateur 5 peut être en contact avec ledit tube 4 à condition de ne pas être en contact avec l'élément caloporteur 3.

Le transformateur 5 est fixé à la couverture 1, et/ou au réflecteur 2, et/ou au tube à vide 4. Ledit transformateur 5 est situé dans le plan de symétrie de la section du réflecteur, sur toute la longueur du capteur solaire. Plus précisément, si l'élément caloporteur 3, qui se trouve au foyer du réflecteur cylindro-parabolique 2, se situe au bas de la parabole, comme représenté dans la figure 1, ledit transformateur 5 sera disposé sous la plaque de couverture 1, alors que si l'élément caloporteur 3 se situe sous la couverture 1, ledit transformateur 5 sera disposé entre l'élément caloporteur 3 et le bas de la parabole. Pour toutes les situations intermédiaires, c'est-à-dire pour toutes les positions que peut adopter l'élément caloporteur 3 le long du plan de symétrie de la section du réflecteur 2, le transformateur 5 peut prendre la forme de deux éléments distincts qui sont disposés de part et d'autre de l'élément caloporteur 3, l'un vers la couverture, l'autre vers le bas de la parabole.

Le transformateur 5 est bon conducteur de chaleur, de préférence, il s'agit d'une lame de carbone ou de silice, ou bien il peut s'agir d'une lame, ou une plaque, de métal ou d'alliage métallique. Ledit métal peut être par exemple du cuivre, de l'aluminium, de l'argent, de l'or, du tungstène, du laiton, de l'étain, ou des alliages de l'un ou plusieurs des métaux cités précédemment.

Dans une forme d'exécution préférée de l'invention, le transformateur 5 est fait d'un matériel quelconque qui est recouvert d'une substance à forte émission thermique. Ladite substance peut également être à forte absorption du spectre solaire et à forte émission thermique. Ce peut être toute substance d'aspect noirâtre, de préférence de nature métallique. Cela peut être du carbone sous toute ces formes, suie ou graphite par exemple, ou de la silice. Cela peut être un métal tel que le cuivre, l'aluminium, l'aluminium anodisé, l'argent, l'or, le tungstène, le laiton, l'étain, ou des alliages de l'un ou plusieurs des métaux cités précédemment.

De préférence, le transformateur 5 a une forme rectangulaire.

Avantageusement, le transformateur 5 peut comprendre en outre des lamelles pouvant être reliées entre elles (figure 2). Cette forme particulière de réalisation de l'élément 5 permet une meilleure diffusion et répartition du rayonnement émis par le transformateur 5 dans le volume 7. Cela permet d'atténuer les turbulences éventuellement présentes dans le volume 7.

Le volume 7 correspond à l'espace existant entre le réflecteur et la couverture du capteur. Ledit volume 7 contient un gaz, ou un fluide, capable d'absorber le rayonnement infrarouge.

De préférence, le gaz remplissant ledit volume 7 est du dioxyde de carbone ou de l'air enrichi en dioxyde de carbone ou enrichie à la vapeur d'eau. Ce peut être encore un ou plusieurs CFC, du méthane ou de l'hexafluorure de soufre.

La pression du gaz du volume 7 peut être inférieure, égale, ou supérieure, à la pression atmosphérique. A ces fins, le capteur solaire peut comprendre en outre une ouverture permettant de remplir ou évacuer le fluide du volume 7.

De préférence, le berceau 8, sur lequel repose l'ensemble couverture 1, réflecteur 2, élément caloporteur 3, est fait en métal, en aluminium par exemple, ou en bois, ou en matériau composite, ou bien encore en une combinaison de ces matériaux.

Le capteur solaire selon l'invention comprend avantageusement au moins un moyen de poursuite du soleil. Ledit moyen permet de suivre la course du soleil et d'ajuster la position du capteur dans toutes les directions afin d'obtenir une exposition solaire optimale, c'est-à-dire afin de permettre au collecteur d'adopter une position idéale par rapport au soleil pour en capter le maximum d'énergie. Ceci est obtenu grâce à des moyens mécaniques ou hydrauliques.

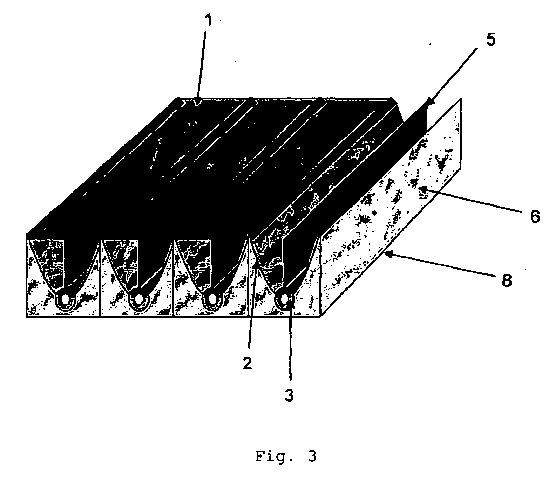

De préférence le capteur solaire selon l'invention est utilisé sous la forme de panneaux solaires (figure 3).

De préférence le capteur solaire selon l'invention est utilisé pour la production d'électricité, de chauffage, de climatisation ou pour le dessalement de l'eau.

## Revendications

1. Capteur solaire à concentration comprenant une couverture (1) transparente aux rayons solaires, un réflecteur de section cylindro-parabolique (2), ladite couverture (1) et ledit réflecteur (2) définissant un volume (7), et un élément caloporteur (3) **caractérisé en ce qu'**il comprend en outre un transformateur (5) permettant de diminuer les pertes d'énergie par émissivité, ledit transformateur (5) étant recouvert d'une substance à forte émission thermique, **en ce que** ledit transformateur (5) absorbe une partie du rayonnement solaire et réémette de la chaleur dans ledit volume (7), et **en ce que** ledit transformateur (5) n'est pas en contact avec ledit élément caloporteur (3).

2. Capteur solaire à concentration selon la revendication 1 dans lequel l'élément caloporteur (3) est disposé à l'intérieur d'un tube à vide (4) transparent.

3. Capteur solaire à concentration selon l'une quelconque des revendications précédentes dans lequel le transformateur (5) est fixé à la couverture (1) et/ou au réflecteur (2) et/ou au tube à vide (4).

4. Capteur solaire à concentration selon l'une quelconque des revendications précédentes dans lequel le transformateur (5) est une lame située dans le plan de symétrie de la section du réflecteur(2).

5. Capteur solaire à concentration selon l'une quelconque des revendications précédentes dans lequel le transformateur (5) est une lame de carbone ou de silice ou une lame métallique.

6. Capteur solaire à concentration selon l'une quelconque des revendications précédentes dans lequel le transformateur (5) comprend des lamelles (9).

7. Capteur solaire à concentration selon la revendication 1 dans lequel la couverture (1) du capteur est faite en matière synthétique transparente ou en verre solaire.

8. Capteur solaire à concentration selon la revendication 1 dans lequel le volume (7) est un volume rempli d'un gaz ou d'un liquide.

9. Capteur solaire à concentration selon la revendication 8 dans lequel ledit capteur comprend en outre une ouverture permettant de remplir ou évacuer le gaz ou le liquide du volume (7).

10. Capteur solaire à concentration selon la revendication 1 dans lequel l'élément caloporteur (3) a une section rectangulaire, une section circulaire, une section ovale, ou a une forme carrée.

11. Capteur solaire à concentration selon la revendication 1 dans lequel l'élément caloporteur (3) est un tube métallique ou un tube en matière plastique.

12. Capteur solaire à concentration selon la revendication 1 dans lequel la surface de l'élément caloporteur (3) est recouverte partiellement ou entièrement d'une substance à forte absorption du spectre solaire et à faible émission thermique.

13. Capteur solaire à concentration selon la revendication 1 dans lequel l'élément caloporteur (3) possède les caractéristiques d'un caloduc.

14. Capteur solaire à concentration selon la revendication 1 dans lequel l'élément caloporteur (3) se situe au foyer du capteur solaire.

15. Capteur solaire à concentration selon la revendication 1 dans lequel l'élément caloporteur (3) contient un liquide ou un gaz caloporteur.

16. Capteur solaire à concentration selon la revendication 1 dans lequel ledit capteur comprenant en outre un isolant thermique (6).

17. Capteur solaire à concentration selon la revendication 16 dans lequel l'isolant (6) est choisi parmi une mousse de polyuréthane, une mousse de polystyrène, de la fibre de roche, et de la fibre de verre.

18. Capteur solaire à concentration selon l'une quelconque des revendications précédentes dans lequel ledit capteur comprend en outre au moins un moyen de poursuite du soleil.

19. utilisation du capteur solaire selon l'une quelconque des revendications précédentes sous la forme de panneaux solaires.

20. utilisation du capteur solaire selon l'une quelconque des revendications précédentes pour la production d'électricité ou de chauffage ou de climatisation ou pour le dessalement de l'eau.

## Claims

1. Concentrating solar collector comprising a cover (1) transparent to solar rays, a reflector (2) of cylindro-parabolic cross section, said cover (1) and said reflector (2) defining a volume (7), and a heat-transfer element (3), **characterized in that** it further includes a transformer (5) for reducing the emissivity energy losses, said transformer (5) being covered by a substance having a high thermal emission, **in that** said transformer (5) absorbs some of the solar radiation and reemits heat into said volume (7) and **in that** said transformer (5) is not in contact with said heat-transfer element (3).

2. Concentrating solar collector according to Claim 1, in which the heat-transfer element (3) is placed inside a transparent vacuum tube (4).

3. Concentrating solar collector according to any of the preceding claims, in which the transformer (5) is fixed to the cover (1) and/or to the reflector (2) and/or to the vacuum tube (4).

4. Concentrating solar collector according to any of the preceding claims, in which the transformer (5) is a plate lying in the plane of symmetry of the cross section of the reflector (2).

5. Concentrating solar collector according to any of the preceding claims, in which the transformer (5) is a carbon or silica plate or a metal plate.

6. Concentrating solar collector according to any of the preceding claims, in which the transformer (5) includes lamellae (9).

7. Concentrating solar collector according to Claim 1, in which the cover (1) of the collector is made of a transparent plastic or of solar glass.

8. Concentrating solar collector according to Claim 1, in which the volume (7) is a volume filled with a gas or with a liquid.

9. Concentrating solar collector according to Claim 8, in which said collector further includes an opening in order for the gas or the liquid to be injected into the volume (7) or to be moved therefrom.

10. Concentrating solar collector according to Claim 1, in which the heat-transfer element (3) has a rectangular cross section, a circular cross section or an oval cross section, or has a square shape.

11. Concentrating solar collector according to Claim 1, in which the heat-transfer element (3) is a metal tube or a plastic tube.

12. Concentrating solar collector according to Claim 1, in which the surface of the heat-transfer element (3) is partly or entirely covered with a substance having a high absorption of the solar spectrum and a low thermal emission.

13. Concentrating solar collector according to Claim 1, in which the heat-transfer element (3) possesses the characteristics of a heat pipe.

14. Concentrating solar collector according to Claim 1, in which the heat-transfer element (3) is located at the focus of the solar collector.

15. Concentrating solar collector according to Claim 1, in which the heat-transfer element (3) contains a heat-transfer liquid or gas.

16. Concentrating solar collector according to Claim 1, in which said collector further includes a thermal insulator (6).

17. Concentrating solar collector according to Claim 16, in which the insulator (6) is chosen from a polyurethane foam, a polystyrene foam, rock fibre and glass fibre.

18. Concentrating solar collector according to any of the preceding claims, in which said collector further includes at least one means for tracking the sun.

19. Use of the solar collector according to any of the preceding claims, in the form of solar panels.

20. Use of the solar collector according to any of the preceding claims for the generation of electricity or for heating or for air conditioning or for water desalination.

## Patentansprüche

1. Konzentrations-Solarkollektor, welcher umfasst; eine für Sonnenstrahlen durchlässige Abdeckung (1), einen Reflektor (2) mit einem zylinderparabolischem Querschnitt, wobei die Abdeckung (1) und der Reflektor (2) ein Volumen (7) bestimmen, sowie ein Wärme transportierendes Element (3), **dadurch gekennzeichnet, dass** der Konzentrations-Solarkollektor des Weiteren einen Transformator (5) umfasst, welcher es gestattet die durch Strahlung verursachten Energieverluste zu vermindern, wobei der Transformator (5) mit einer ein starkes thermisches Ausstrahlungsvermögen aufweisenden Substanz überdeckt ist, dass der Transformator (5) einen Teil der Sonnenstrahlung absorbieren und wieder Wärme in das besagte Volumen (7) abgeben soll, und dass der Transformator (5) nicht mit dem besagten Wärme transportierenden Element (3) in Berührung steht.

2. Konzentrations-Solarkollektor gemäß Anspruch 1, in welchem das Wärme transportierende Element (3) im Innern eines unter Vakuum stehenden, durchsichtigen Rohres (4) angeordnet ist.

3. Konzentrations-Solarkollektor gemäß irgendeinem der vorhergehenden Ansprüche, in welchem der Transformator(5) an der Abdeckung (1) und/oder an dem Reflektor (2) und/oder an dem unter Vakuum stehenden Rohr (4) befestigt ist.

4. Konzentrations-Solarkollektor gemäß irgendeinem der vorhergehenden Ansprüche, in welchem der Transformator (5) aus einem Blatt besteht, welches sich in der Symmetrieebene des Schnittes des Reflektors (2) befindet.

5. Konzentrations-Solarkollektor gemäß irgendeinem der vorhergehenden Ansprüche, in welchem der Transformator (5) aus einer Klinge aus Kohlenstoff oder aus Silizium, oder aus einer Klinge aus Metall besteht.

6. Konzentrations-Solarkollektor gemäß irgendeinem der vorhergehenden Ansprüche, in welchem der Transformator (5) Lamellen (9) aufweist.

7. Konzentrations-Solarkollektor gemäß Anspruch 1, in welchem die Abdeckung (1) des Kollektors aus einem synthetischen, durchsichtigen Material oder aus Sonnenglas hergestellt ist.

8. Konzentrations-Solarkollektor gemäß Anspruch 1, in welchem das Volumen (7) aus einem mit einem Gas oder mit einer Flüssigkeit gefüllten Volumen besteht.

9. Konzentrations-Solarkollektor gemäß Anspruch 8, in welchem besagter Kollektor außerdem eine Öffnung aufweist, welche ein Einfüllen oder ein Ablassen des Gases oder der Flüssigkeit aus dem Volumen (7) gestattet.

10. Konzentrations-Solarkollektor gemäß Anspruch 1, in welchem das Wärme transportierende Element (3) einen rechteckigen Querschnitt, einen kreisrunden Querschnitt, einen ovalen Querschnitt oder eine viereckige Form aufweist.

11. Konzentrations-Solarkollektor gemäß Anspruch 1, in welchem das Wärme transportierende Element (3) aus einem Metallrohr oder aus einem Kunststoffrohr besteht.

12. Konzentrations-Solarkollektor gemäß Anspruch 1, in welchem die Oberfläche des Wärme transportierenden Elementes (3) teilweise oder ganz mit einer Substanz mit einer hohen Absorption des Sonnenspektrums und mit einer geringen thermischen Strahlungsvermögen überdeckt ist.

13. Konzentrations-Solarkollektor gemäß Anspruch 1, in welchem das Wärme transportierende Element (3) die Eigenschaften eines Wärmetransportrohres besitzt.

14. Konzentrations-Solarkollektor gemäß Anspruch 1, in welchem das Wärme transportierende Element (3) sich in dem Brennpunkt des Solarkollektors befindet.

15. Konzentrations-Solarkollektor gemäß Anspruch 1, in welchem das Wärme transportierende Element (3) eine Wärme transportierende Flüssigkeit oder ein Wärme transportierendes Gas enthält.

16. Konzentrations-Solarkollektor gemäß Anspruch 1, in welchem der Kollektor außerdem einen thermischen Isolator (6) enthält.

17. Konzentrations-Solarkollektor gemäß Anspruch 16, in welchem der Isolator (6) ausgewählt wird unter Polyurethanschaum, Polystyrolschaum, Steinwolle oder Glaswolle.

18. Konzentrations-Solarkollektor gemäß irgendeinem der vorhergehenden Ansprüche, in welchem der Kollektor außerdem mindestens eine Vorrichtung zur Sonnenbahnverfolgung umfasst.

19. Verwendung des Solarkollektors gemäß irgendeinem der vorhergehenden Ansprüche unter der Form von Solarzellenpanelen.

20. Verwendung des Solarkollektors gemäß irgendeinem der vorhergehenden Ansprüche zur Erzeugung von Elektrizität oder zur Heizung oder Klimatisierung oder zur Entsalzung von Wasser.
